# EUROPEAN PATENT SPECIFICATION

(11) **EP 0 512 589 B1**
(45) Date of publication and mention of the grant of the patent: **02.08.1995**
(21) Application number: 92200980.8
(22) Date of filing: 06.04.1992
(51) Int. Cl.: B65D 65/46, A21D 13/00

(54) **Process for manufacturing an environment-friendly packaging material**
Verfahren zur Herstellung von umweltfreundlichem Verpackungsmaterial
Procédé pour fabriquer de la matière d'emballage non-polluante

(30) Priority: 05.04.1991 NL 9100590
(43) Date of publication of application: 11.11.1992
(73) Proprietor: PRODUCTIE CENTRALE LIMBURG B.V., 6085 BE Horn (NL)
(72) Inventor: Rooswinkel, Josef Nicolaas Marie, NL-6085 BE Horn (NL)
(74) Representative: Kooy, Leendert Willem

(56) References cited:
- EP-A- 0 265 745
- EP-A- 0 271 853
- WO-A-91/12186
- DE-A- 3 704 192
- GB-A- 2 190 093

## Description

The invention relates to a process for manufacturing an environmentally friendly packaging which upon disposal is quickly decomposed, e.g. into compost or can be reused as component for animal food, or may possibly be consumed, comprising the moulding of a dough of flour and water with the usual additives into a packaging and subjecting the moulding piece to a heat treatment.

Such a process is known from EP-A-265745. According to said patent application an environmentally friendly packaging is manufactured by moulding a dough being in practice substantially composed of wheat flour, possibly including leavening agents, and -if desired- proteins and additional additives, such as flavourings and colourings, and water, e.g. dough for waffles, sponge cakes, flans, wafers or whole meal products, into the desired shape of a packaging and baking it. In order to make said packagings resistant to liquid components of the foodstuffs to be packaged therein, the inner surface of the packaging is covered with a layer of wafer which may either be manufactured separately and put into the packaging afterwards, or may be formed by coating the moulding piece for the packaging with a layer of wafer dough before baking, to which optionally gelatin may be added to avoid the formation of pores, followed by baking it as a whole. A further improvement of the density of the packaging may be possibly obtained by applying a layer of hard-fat glaze.

The lining of the packaging with a layer of wafer, which is necessary in practice, and any other measures to improve the density of said packagings make the known process time-consuming and expensive.

The aim of the invention is to provide a process by which a packaging is obtained in one step from one single dough, which packaging has a high resistance to liquids and is e.g. suitable for packaging both cold and hot foodstuffs.

This aim is reached according to the invention when a dough of potato starch, a minor amount of grain starch, edible oil, the usual additives, including stabilizers and emulsifiers, and water is shaped into a packaging by press moulding, is heated in the moulding die in 60-120 s to a temperature of 65-105°C, is cooled slowly after reaching the required temperature and removed from the moulding die.

This process requires that the dough comprises a larger part of potato starch as well as a minor amount of grain starch and that it is not heated to temperatures exceeding 105°C. Consequently, during heating no baking takes place, for which in general temperatures of at least 150°C are required.

In a dough of such a composition the starch structure changes upon heating to 65 - 150°C. As the heating is carried out slowly, within 60 to 120 seconds, in the closed moulding die, the packaging will obtain a smooth closed surface layer, while the edible oil provides said surface with moisture-resistant properties.

Advantageously the dough is composed of
600-1000 parts by weight of potato starch,
75-400 parts by weight of grain starch,
0.5-3 parts by weight of stabilizer,
15-35 parts by weight of edible oil,
0.5-3 parts by weight of emulsifier,
1000-1800 parts by weight of water,
and, if desired, a slight amount (e.g. 0.5-5 parts by weight) of salt.

A dough of such a composition can be processed very well and packagings with a constant good quality are obtained. Best results are obtained with a dough composed of
700-900 parts by weight of potato starch,
0.5-1.5 parts by weight of stabilizer,
20-30 parts by weight of edible oil,
1,5-2.5 parts by weight of emulsifier,
100-300 parts by weight of grain starch,
1000-1500 parts by weight of water
if desired 1-3 parts by weight of salt
The usual commercially available types of potato starch for baking products may be used.

As for grain starch, the current types of grain starch may be used, such as flours made of wheat, barley, rye, oats, corn, rice, and sorghum and the like, whether or not sifted, which may be modified, if required, so as to improve their baking and processing properties.

The stabilizers serve to maintain the quality of the dough. The commercially available products for this purpose can be used in this respect.

The emulsifiers serve to distribute the components of the dough homogeneously, so that the dough obtains a good elasticity. In particular, they take care of the emulsifying of the edible oil. In general monoglycerides and diglycerides are used, but also salts of fatty acids and lactic acid, ethoxylated monoglycerides, polysorbates and the like may serve as emulsifiers.

The edible oil provides the packagings formed of dough with moisture-resistant properties.

For this purpose both saturated and unsaturated edible oils may be used. Preferably, unsaturated edible oils, such as sunflower oil or soybean oil are used; this will result in packagings with very uniform, favourable, moisture-resistant properties.

In practice lecithin, which acts both as an anti-oxidant and as emulsifier, is also incorporated in the dough, so that the shelf life and the moisture-resistant properties of the packagings are improved and an optimal result is obtained.

The salt which possibly may be added to the dough improves the texture of the dough. Highly suitable are alkaline earth metal phosphates, such as tricalciumphosphate.

In preparing the dough, the components are mixed in a usual manner.

Preferably, water and oil are mixed first, followed by addition of the dry components, and subsequently, when the mass is smooth and homogeneous, the addition of the lecithin.

The invention is elucidated by the following examples.

### Examples I-III.

Four dough mixtures were prepared in the above-described way, having the composition as given in the following table, from which small dishes with a wall thickness of 3-3.5 mm were moulded by press moulding in a die consisting of a concave moulding piece and a convex moulding piece. The small dishes were heated in the closed moulding die for 90±5 s, up to 85±5°C, after which the die was opened and air-cooled down to about 30°C. The thus-formed small packaging dishes were removed from the die.

The resulting small dishes were tested for their moisture-resistant properties, by filling a dish of each type with water, followed by examining them in order to find out after how much time water had diffused through the wall and the outer surface became moist. The results are given in the table.

Small dishes of each type were used to package hot meals (potatoes, meat, gravy).

In all cases the meal kept its taste.

**Table**

| | I | II | III | IV |
|---|---|---|---|---|
| potatoe starch (g) | 700 | 800 | 800 | 900 |
| stabilizer (g) (Keltron F, supplied by Dandy Food, Amsterdam) | 1 | 1 | 1 | 1 |
| tricalcium phosphate (g) | 2 | 2 | 2 | 2 |
| sunflower oil (g) | 20 | 25 | | 30 |
| soybean oil (g) | | | 25 | |
| emulsifier, Ca-lactate (g) | 2 | 2 | 2 | 2 |
| grain starch (g) (modified) (Facinix T-70 of Avébé) | 100 | 200 | 200 | 200 |
| water (g) | 1300 | 1300 | 1300 | 1300 |
| resistance to moisture | 2 hrs | 3 hrs | 4 hrs | 2 hrs |

In all cases the packagings proved to have an excellent resistance to moisture. Best results were obtained with a ratio of potato starch and grain starch in the ratio of 4:1. This result was not influenced by the type of edible oil.

## Claims

1. Process for manufacturing an environmentally friendly packaging which is quickly decomposed upon disposal, e.g. into compost, or can be reused as component for animal food, or may possibly be consumed, by press moulding a dough of flour and water with the usual additives, into a packaging and subjecting the moulding piece to a heat treatment, characterized in that a dough of potato starch, a minor amount of grain starch, edible oil, the usual additives, including stabilizers and emulsifiers and water is shaped into a packaging by press moulding, is heated in the moulding die within 60 to 120 seconds up to a temperature of 65-105°C, cooled down slowly after reaching the required temperature and removed from the moulding die.

2. Process according to claim 1, characterized in that the dough is composed of
600-1000 parts by weight of potato starch,
75-400 parts by weight of grain starch,
0.5-3 parts by weight of stabilizer,
15-35 parts by weight of edible oil,
0.5-3 parts by weight of emulsifier
1000-1800 parts by weight of water
and, if desired, a slight amount (e.g. 0.5-5 parts by weight) of salt.

3. Process according to claim 1 or 2, characterized in that the dough is composed of
700-900 parts by weight of potato starch
100-300 parts by weight of grain starch
0.5-1.5 parts by weight of stabilizer
1-3 parts by weight of salt
20-30 parts by weight of edible oil
1000-1500 parts by weight of water.

4. Process according to any one of the preceding claims, characterized in that the edible oil in the dough consists of unsaturated oils.

5. Process according to claim 4, characterized in that the edible oil is sunflower oil or soybean oil.

6. Process according to any one of the preceding claims, characterized in that 15-35 parts by weight, in particular 20-30 parts by weight of lecithin are also included in the dough.

7. Process according to any one of the preceding claims, characterized in that a measured amount of the dough is introduced into the concave moulding piece of a moulding die, the dough is press moulded into the desired shape by means of the convex moulding piece of the die and the die containing the shaped dough is externally heated.

8. Process according to any one of the preceding claims, characterized in that the dough is moulded into a packaging having a wall thickness of at least 2 mm.

9. Process according to claim 7, characterized in that the wall thickness of the packaging is at least 3 mm.

## Patentansprüche

1. Verfahren zum Herstellen einer umweltfreundlichen Verpackung, die beim Wegwerfen schnell, zum Beispiel bis zum Kornpost abgebaut werden kann, oder wieder als Futterbestandteil benutzt werden kann, oder gegebenenfalls konsumiert werden kann, wobei man einen Mehlteig und Wasser mit den üblichen Zusätzen, durch Pressgiessen in die Form einer Verpackung bringt und das Formkörper eine Wärmebehandlung unterwirft **dadurch gekennzeichnet, dass** ein Teig aus Kartoffelstärke, einer geringen Menge Cerealienstärke, Speiseöl, den üblichen Zusätzen, unter denen Stabilisatoren und Emulgatoren, mit Wasser durch das Pressgiessen in die Form einer Verpackung gebracht wird, in der Formmatrize in 60-120 Sekunden bis auf eine Temperatur von 65-105°C erhitzt wird, nach dem Erreichen der verlangten Temperatur langsam abgekühlt und aus der Formmatrize entfernt wird.

2. Verfahren nach Anspruch 1, **dadurch gekennzeichnet, dass** der Teig aus
600-1000 Gewichtsteilen Kartoffelstärke,
75-400 Gewichtsteilen Cerealienstärke,
0,5-3 Gewichtsteilen Stabilisator,
15-35 Gewichtsteilen Speiseöl,
0,5-3 Gewichtsteilen Emulgator,
1000-1800 Gewichtsteilen Wasser,
und gegebenenfalls einer geringen Menge (z.B. 0,5-5 Gewichtsteilen) Salz
zusammengesetzt ist.

3. Verfahren nach Anspruch 1 oder 2, **dadurch gekennzeichnet, dass** der Teig aus
700-900 Gewichtsteilen Kartoffelstärke,
100-300 Gewichtsteilen Cerealienstärke,
0,5-1,5 Gewichtsteilen Stabilisator,
1-3 Gewichtsteilen Salz,
20-30 Gewichtsteilen Speiseöl,
1000-1500 Gewichtsteilen Wasser
zusammengesetzt ist.

4. Verfahren nach irgendeinem der vorhergehenden Ansprüche, **dadurch gekennzeichnet, dass** das Speiseöl in dem Teig aus ungesättigten Ölen besteht.

5. Verfahren nach Anspruch 4, **dadurch gekennzeichnet, dass** das Speiseöl Sonnenblumenöl oder Sojaöl ist.

6. Verfahren nach irgendeinem der vorhergehenden Ansprüchen, **dadurch gekennzeichnet, dass** in dem Teig auch noch 15-35 Gewichtsteile, insbesondere 20-30 Gewichtsteile Lezithin aufgenommen sind.

7. Verfahren nach irgendeinem der vorhergehenden Ansprüchen, **dadurch gekennzeichnet, dass** eine abgemessene Menge des Teigs in den konkaven Giessformteil einer Formmatrize gebracht wird, mittels des konvexen Giessformteils der Matrize der Teig in die verlangte Form pressgegossen wird und die den in der verlangten Form gebrachten Teig enthaltende Matrize äusserlich erhitzt wird.

8. Verfahren nach irgendeinem der vorhergehenden Ansprüche, **dadurch gekennzeichnet, dass** der Teig in eine Verpackung mit einer Wanddicke von wenigstens 2 mm geformt wird.

9. Verfahren nach Anspruch 7, **dadurch gekennzeichnet, dass** die Verpackungswanddicke wenigstens 3 mm ist.

## Revendications

1. Procédé de fabrication d'un emballage respectueux de l'environnement qui se décompose rapidement, par exemple en compost, lorsqu'on le jette, ou peut être réutilisé comme composant pour l'alimentation animale, ou peut être mangé le cas échéant, par moulage sous pression d'une pâte de farine et d'eau avec les additifs usuels en un emballage, et traitement thermique de la pièce moulée, caractérisé en ce qu'une pâte de fécule de pomme de terre, d'une moindre quantité d'amidon de grain, d'huile alimentaire, d'additifs usuels, y compris des stabilisants et des émulsifiants et de l'eau, est mise en forme d'emballage par moulage sous pression, est chauffée dans le moule pendant 60 à 120 secondes jusqu'à une température de 65-105°C, refroidie lentement après avoir atteint la température voulue et retirée du moule.

2. Procédé selon la revendication 1, caractérisé en ce que la pâte est composée de :
600-1000 parties en poids de fécule de pomme de terre,
75-400 parties en poids d'amidon de grain,
0,5-3 parties en poids de stabilisant,
15-35 parties en poids d'huile alimentaire,
0,5-3 parties en poids d'émulsifiant,
1000-1800 parties en poids d'eau,
et, si on le souhaite, d'une faible quantité (par exemple 0,5-5 parties en poids) de sel.

3. Procédé selon la revendication 1 ou 2, caractérisé en ce que la pâte est composée de :
700-900 parties en poids de fécule de pomme de terre,
100-300 parties en poids d'amidon de grain,
0,5-1,5 parties en poids de stabilisant,
1-3 parties en poids de sel,
20-30 parties en poids d'huile alimentaire,
1000-1500 parties en poids d'eau.

4. Procédé selon l'une quelconque des revendications précédentes, caractérisé en ce que l'huile alimentaire dans la pâte est constituée d'huiles insaturées.

5. Procédé selon la revendication 4, caractérisé en ce que l'huile alimentaire est de l'huile de tournesol ou de l'huile de soja.

6. Procède selon l'une quelconque des revendications précédentes, caractérisé en ce que 15-35 parties en poids, en particulier 20-30 parties en poids de lécithine, sont aussi incorporées dans la pâte.

7. Procède selon l'une quelconque des revendications précédentes, caractérisé en ce qu'une quantité déterminée de pâte est introduite dans la partie concave du moule, la pâte étant moulée sous pression dans la forme voulue au moyen de la partie convexe du moule, le moule contenant la pâte mise en forme étant chauffé extérieurement.

8. Procédé selon l'une quelconque des revendications précédentes, caractérisé en ce que la pâte est moulée en un emballage ayant une paroi d'épaisseur égale à au moins 2 mm.

9. Procédé selon la revendication 7, caractérisé en ce que l'épaisseur de la paroi est égale à au moins 3 mm.
